# FASCICULE DE BREVET EUROPEEN

(11) **EP 0 786 638 B1**
(45) Date de publication et mention de la délivrance du brevet: **27.09.2000**
(21) Numéro de dépôt: 97460003.3
(22) Date de dépôt: 15.01.1997
(51) Int. Cl.: F28F 9/14, F28F 9/02, F28F 21/06, B23P 19/02

(54) **Echangeur de chaleur et machine pour le montage d'un tel échangeur**
Wärmetauscher und Maschine zum Zusammenbau eines solchen Wärmetauschers
Heat exchanger and machine for mounting such an exchanger

(30) Priorité: 26.01.1996 FR 9601196; 09.07.1996 FR 9608790
(43) Date de publication de la demande: 30.07.1997
(73) Titulaire: Piscine Service Anjou SA, 49017 Angers Cédex 01 (FR)
(72) Inventeur: Romero, Francis, 49017 Angers Cedex 01 (FR)
(74) Mandataire: Maillet, Alain

(56) Documents cités:
- WO-A-84/02180
- CH-A- 335 307
- DE-A- 2 848 304
- DE-A- 3 408 412
- FR-A- 1 089 816
- FR-A- 1 449 311
- FR-A- 2 636 416
- GB-A- 1 366 437

## Description

La présente invention concerne un échangeur de chaleur. Un tel échangeur de chaleur est par exemple un échangeur eau/eau destiné à être utilisé dans le circuit de chauffage d'une piscine.

Plus particulièrement, l'invention concerne un échangeur thermique du type à faisceau de tubes rectilignes et parallèles entre eux, constitué d'un corps de forme générale cylindrique qui est pourvu d'une amenée et d'une sortie pour le fluide primaire et dont les tronçons d'extrémité sont pourvus de flasques fermant ledit corps et à travers lesquels passent lesdits tubes, des bouches pour l'amenée et la sortie du fluide secondaire étant respectivement prévues aux extrémités dudit corps. Un tel échangeur de chaleur est connu du document GB-A-1 366 437.

Plus précisément, le but de l'invention est de prévoir un échangeur qui soit simple et économique à monter.

Afin d'atteindre ce but, l'échangeur selon l'invention est du type qui est décrit précédemment dans lequel chaque flasque formé dans un matériau du type caoutchouc est constitué d'une plaque circulaire dont chacune des faces comporte sur sa périphérie un jeu de lèvres circulaires et parallèles entre elles, ledit flasque étant prévu pour reposer, par un desdits jeux de lèvres, sur une surface radiale du tronçon d'extrémité correspondant dudit corps, chaque bouche comportant un tronçon d'extrémité pourvu d'une surface frontale radiale prévue pour reposer sur l'autre jeu de lèvres dudit flasque, un écrou étant prévu pour venir se visser sur la paroi externe de chaque tronçon d'extrémité dudit corps, ledit écrou étant pourvu de moyens pour serrer ladite bouche contre ledit flasque de manière que ledit flasque soit enserré entre ladite bouche et ledit corps.

Selon une autre caractéristique de l'échangeur selon l'invention, chaque bouche comporte sur son tronçon d'extrémité un ergot destiné à pénétrer dans une rainure prévue dans le tronçon d'extrémité dudit corps de manière à immobiliser ladite bouche en rotation lors du vissage de l'écrou sur le corps. Il comporte avantageusement des plaques de renfort qui sont respectivement montées entre un flasque et une bouche, lesdites plaques de renfort pouvant comporter au moins un raidisseur.

Selon une autre caractéristique de l'échangeur de l'invention, chaque flasque est percé de trous pour le passage desdits tubes du faisceau de tubes, lesdits trous étant pourvus d'au moins une lèvre.

La présente invention concerne également une machine prévue pour permettre le montage des tubes du faisceau de tubes sur les flasques de l'échangeur précédemment décrit.

Le problème particulier que pose cette opération est qu'il n'est pas possible de monter les tubes un à un dans chaque trou des flasques et qu'il faut donc monter le faisceau d'un seul bloc, ce qui suppose des pressions d'enfilage relativement intenses. Par ailleurs, chaque tube, en s'enfilant dans le trou du flasque correspondant, a une forte probabilité pour endommager la paroi de ce trou, ce qui est préjudiciable à l'étanchéité entre ce tube et cette paroi.

Le but de l'invention est donc de proposer une machine qui permette de résoudre les problèmes qui viennent d'être évoqués.

On notera que, sans cette machine, le montage de l'échangeur de l'invention ne semble pas possible et que cette machine est destinée à être utilisée dans cette application.

Une telle machine est donc du type qui comporte des moyens de montage pour permettre le montage des tubes du faisceau de tubes dans des trous de chaque flasque dudit échangeur. Selon une caractéristique de l'invention, lesdits moyens de montage comprennent un support pour supporter un desdits flasques de l'échangeur, une pluralité de doigts en nombre égal au nombre de tubes du faisceau à monter, des moyens pour permettre auxdits doigts de pénétrer et de traverser les trous correspondants du flasque monté sur ledit support de manière que ledit flasque puisse venir reposer sur lesdits doigts, des moyens prévus pour amener chaque tube du faisceau en prolongement d'un doigt coaxialement à celui-ci, et des moyens pour pousser un flasque qui repose sur lesdits doigts afin de le faire passer sur les tubes dudit faisceau prolongeant lesdits doigts, le diamètre desdits doigts étant légèrement supérieur au diamètre desdits tubes à monter.

Selon une autre caractéristique de l'invention, lesdits doigts sont prévus pour se déplacer axialement dans un premier sens pour pouvoir pénétrer dans les trous correspondants du flasque monté sur ledit support et dans un second sens pour entraîner avec eux un flasque qui repose sur eux, lesdits doigts étant prévus pour pouvoir traverser la paroi d'extrémité d'un cylindre et ledit cylindre étant prévu pour se déplacer axialement relativement auxdits doigts dans ledit premier sens afin que ladite paroi d'extrémité puisse pousser ledit flasque qui repose sur lesdits doigts pour le faire passer sur les tubes.

Selon une autre caractéristique de l'invention, lesdits doigts sont portés par un disque prévu pour pouvoir coulisser axialement dans un trou borgne dudit cylindre.

Selon une autre caractéristique de l'invention, ledit cylindre est prévu pour être entraîné par des moyens d'entraînement et en ce qu'une fourchette est prévue pour pouvoir coupler ledit cylindre audit disque portant lesdits doigts.

Selon une autre caractéristique de l'invention, ladite machine comprend des tiges prévues pour recevoir lesdits tubes du faisceau de tubes à monter et pour les mettre en position en prolongement axial desdits doigts.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en coupe d'un échangeur selon l'invention,
la Fig. 2 est une vue en coupe d'une extrémité d'un échangeur selon l'invention, les différents éléments le composant étant prêts à être montés,
la Fig. 3 est une vue de face d'un flasque selon l'invention,
la Fig. 4 est une vue de dessus d'une machine selon l'invention qui permet le montage des flasques d'un échangeur selon l'invention sur les tubes,
la Fig. 5a est une vue en coupe d'une tête de montage d'une machine selon l'invention,
la Fig. 5b est une vue en coupe selon le plan V/V de la Fig. 5a, et
les Figs. 6 à 8 illustrent le montage d'un flasque sur les tubes d'un échangeur au moyen d'une machine selon l'invention.

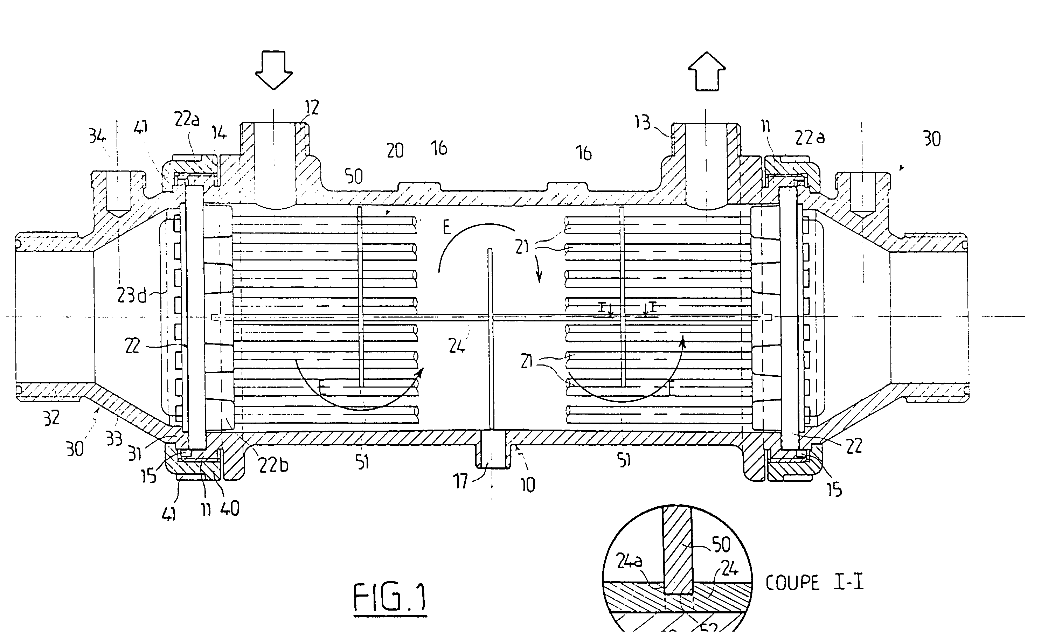

L'échangeur représenté monté à la Fig. 1 est essentiellement constitué d'un corps 10 de forme générale cylindrique dont les tronçons d'extrémité 11 également cylindriques sont filetés sur une longueur de quelques centimètres. Le corps 10 est avantageusement constitué d'un matériau plastique moulable, par exemple par injection. Avantageusement, ce matériau est un polyamide, chargé de particules de verre.

Le corps cylindrique 10 est pourvu d'une amenée de fluide 12 et d'une sortie de fluide 13 respectivement constituées de manchons venus directement de moulage dont les extrémités pourvues de filetages sont ainsi conçues pour pouvoir recevoir des canalisations appropriées pour le transport du fluide primaire. Celui-ci pénètre donc par l'amenée 12 à l'intérieur du volume engendré par le corps 10 dans lequel il transfert sa chaleur au fluide secondaire, comme on le verra par la suite, puis sort de l'échangeur par la sortie 13.

A l'intérieur du corps 10, est monté le système d'échange de chaleur 20 qui est essentiellement constitué d'un faisceau de tubes rectilignes 21 montés parallèles entre eux, par leurs extrémités, dans des trous percés dans des flasques 22. Les tubes 21 sont par exemple en acier inoxydable ou en titane.

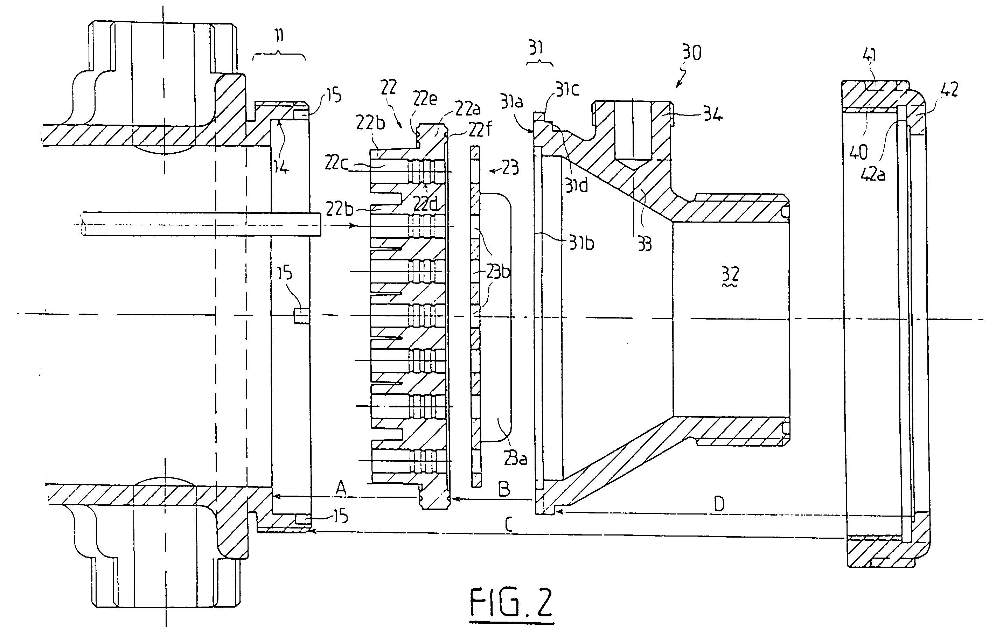

Sur la Fig. 2 qui montre une extrémité de l'échangeur selon l'invention prêt à être monté, on peut voir que chaque flasque 22 est constitué d'une plaque circulaire 22a sur une face de laquelle font saillie plusieurs plots 22b légèrement tronconiques en nombre égal au nombre de tubes de faisceaux de tubes 21. Chaque plot 22b est percé d'un trou 22c qui traverse de part en part le flasque 22.

Comme on peut le voir sur la Fig. 1, chaque tube du faisceau 21 est emmanché légèrement à force dans le trou 22c du plot 22b correspondant et traverse le flasque 22. Chaque trou 22c est pourvu de lèvres annulaires 22d (Fig. 2), par exemple au nombre de trois, de diamètre légèrement inférieur au diamètre du trou 22c. Ces lèvres 22d pincent la surface extérieure du tube 21 ce qui a pour effet d'assurer l'étanchéité entre le circuit secondaire auquel est raccordé l'échangeur et le volume intérieur de l'échangeur.

Chaque flasque 22 est formé dans un matériau du type caoutchouc naturel ou synthétique. On a utilisé avantageusement un élastomère thermoplastique, tel qu'un caoutchouc d'éthylène et de propylène, par exemple le terpolymère d'éthylène-propylène-diène (EPDM). Plus précisément, on a utilisé celui qui est commercialisé sous la marque Santoprène ^{(R)} par la société Monsanto.

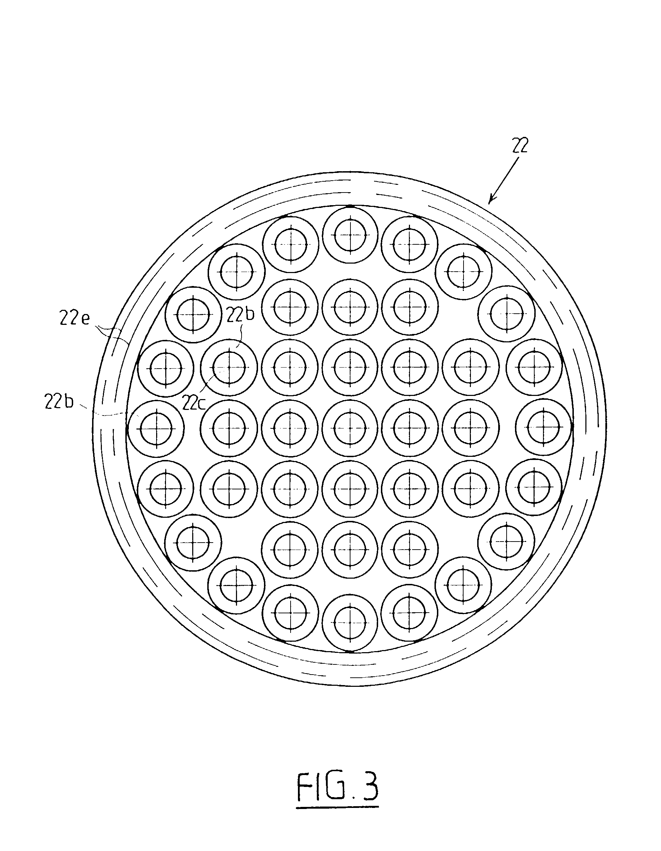

Comme on peut le voir sur la Fig. 1, au montage, la plaque circulaire 22a est prévue pour pénétrer à l'intérieur d'un logement annulaire 14 formé sur la paroi interne du tronçon d'extrémité 11 du corps 10. Ce logement 14 est également visible sur la Fig. 2. La partie périphérique de la face du flasque 22 qui comporte les plots 22b repose dans le fond du logement 14 comme cela est illustré par une flèche A, ledit fond constituant ainsi une surface d'appui. Cette partie périphérique comporte un jeu de lèvres 22e circulaires parallèles entre elles, qui, en étant en contact avec le fond du logement 14, assurent l'étanchéité du volume intérieur du corps 10 avec l'extérieur. On voit sur la Fig. 3 les plots 22b, les trous 22c et les lèvres 22e. On voit également la répartition de ces éléments sur le flasque 22.

Une plaque de renfort 23 est prévue pour reposer sur la face du flasque 22 qui est opposée à celle qui comporte les plots 22b. Elle est pourvue avantageusement d'au moins un raidisseur 23a. Cette plaque 23 est percée de trous 23b qui correspondent aux trous 22c du flasque 22 et qui permettent le passage des tubes 21.

Cette plaque 23 a pour fonction d'éviter la déformation du flasque 22 sous l'influence de la pression du liquide secondaire qui circule dans le volume interne du corps 10.

L'échangeur de l'invention comporte encore, à chacune de ses extrémités, une bouche 30 qui présente, à une première extrémité, un tronçon d'extrémité 31 de forme générale cylindrique et un manchon 32 dont la surface extérieure est filetée de manière à ainsi pouvoir être raccordée à des canalisations appropriées de fluide secondaire. On notera que, dans le mode de réalisation représenté, le manchon 32 est de diamètre inférieur à celui du tronçon d'extrémité 31 si bien que ledit tronçon 31 et ledit manchon 32 sont reliés l'un à l'autre par une partie tronconique 33. Celle-ci comporte des moyens 34 prévus pour la fixation éventuelle d'une canne de mesure (non représentée) par exemple de température ou de débit.

Au montage, la face frontale radiale 31a du tronçon 31 de la bouche 30 repose sur une partie périphérique 22f de la plaque du flasque 22 comme le montre une flèche B. Cette partie périphérique 22f est symétrique de la partie 22e et est, comme cette dernière, pourvue d'un jeu de lèvres circulaires parallèles entre elles qui, en étant en contact avec la face frontale 31a de la bouche 31, assurent l'étanchéité entre le circuit secondaire et l'extérieur.

Le tronçon 31 de la bouche 30 comporte, sur sa face interne, un logement annulaire 31b qui est destiné à loger la plaque de renfort 23, comme cela est visible sur la Fig. 1.

Des écrous 40, présentant par exemple des moyens 41, tels que des méplats, pour placer une clé de serrage, sont filetés sur leur diamètre interne de manière à pouvoir être respectivement vissés sur la surface externe des tronçons d'extrémité 11 du corps 10, comme cela est illustré par une flèche C. Chaque écrou 40 comporte, sur une de ses faces, un rebord annulaire 42 rabattu vers son axe. Ce rebord 42 comporte une face 42a interne qui est destinée, comme on peut le voir sur la Fig. 1 et comme cela est illustré par une flèche D à la Fig. 2, à reposer sur un épaulement 31d du tronçon d'extrémité 31.

Pour bloquer la bouche 30 lors de son montage sur le corps 10 et éviter sa rotation lors du serrage de l'ensemble avec l'écrou 40, on a prévu un ergot 31c qui est destiné à pénétrer, pour y être bloqué, dans une des rainures 15 sur la surface interne du tronçon 11 du corps 10. Le corps 10 comporte quatre rainures 15 si bien qu'il est possible de choisir la position de la bouche 30 entre quatre positions angulaires différentes selon le montage de l'échangeur envisagé.

On notera que dans l'exemple de réalisation représenté, la bouche 30 est coaxiale du corps cylindrique 10 si bien que les canalisations de fluide secondaire partent de l'échangeur dans des directions qui sont coaxiales et opposées.

Les tubes du faisceau du tubes 21 passent dans des trous qui sont percés dans des disques 50 de forme circulaire tronquée de manière que, sur un angle obtu, par exemple de l'ordre de 120°, leurs arêtes périphériques soient en contact avec la paroi interne du corps 10, l'arête tronquée 51 étant quant à elle distante de ladite paroi interne ce qui forme un passage pour le fluide primaire. Les plaques 50 placées en quinconce (les arêtes 51 sont alternativement tournées d'abord dans la direction opposée à celle de l'amenée 12, puis dans la même direction que l'amenée 12 et ainsi de suite ...). Ainsi, le fluide primaire suit, dans le corps 10, le trajet montré par les flèches E de la Fig. 1. Les plaques 50 forment donc des chicanes pour le fluide primaire ce qui a pour effet d'obliger le fluide à venir lécher tous les tubes du faisceau 21, ce qu'il ne ferait pas sans chicanes préférant circuler le long des tubes du faisceau 21 qui sont les plus proches de l'amenée 12 et la sortie 13.

Deux entretoises 24 (seule celle de fond est visible à la Fig. 1) sont disposées en contact de la paroi interne du corps 10 diamétralement opposées l'une à l'autre, comme cela est visible sur le médaillon de la Fig. 1 lequel est une coupe selon le plan I/I de la Fig. 1. Elles comportent des échancrures rectangulaires 24a dans lesquelles sont encastrées des échancrures rectangulaires 52 des plaques 50, lesdites échancrures 52 étant au montage perpendiculaires aux échancrures 24a. De cette manière, les plaques 50 sont fermement maintenues.

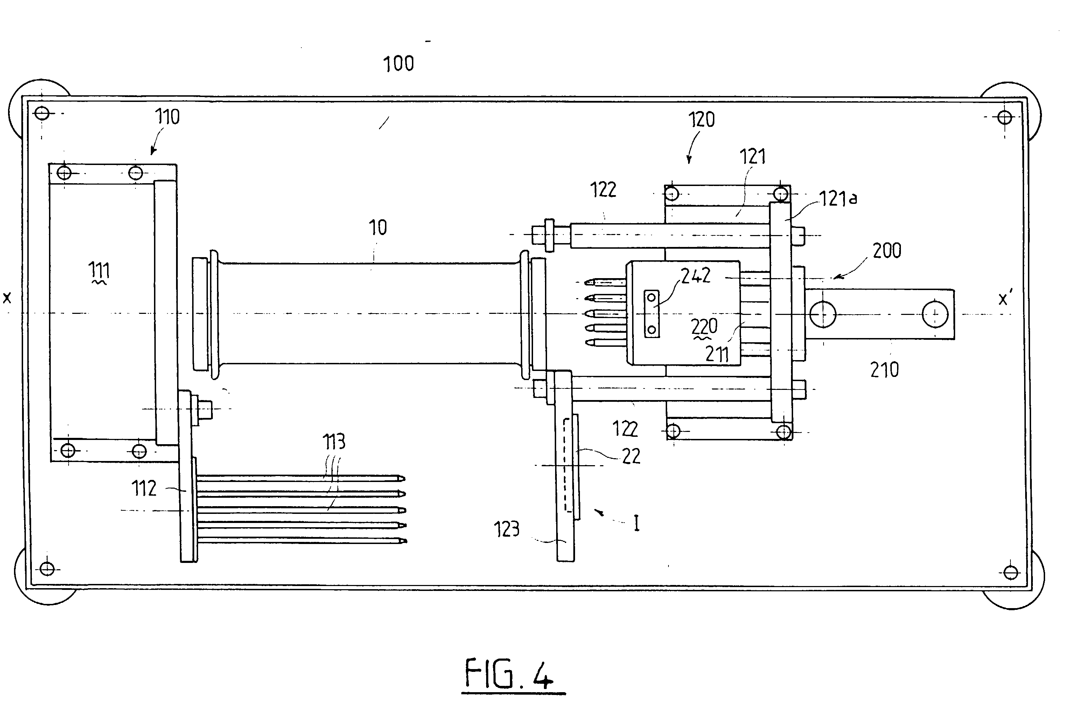

On va maintenant décrire, en relation avec les Figs. 4 à 8, d'une part, un exemple de réalisation d'une machine qui permet le montage des tubes 21 sur les flasques 22 de l'échangeur jusqu'alors décrit et, d'autre part, le fonctionnement d'une telle machine.

La machine représentée vue de dessus à la Fig. 4 est essentiellement constituée d'un bâti 100 sur lequel sont montées une unité 110 de support de tiges et une unité de montage 120. Elle s'étend longitudinalement selon un axe xx'. On a représenté un corps 10 uniquement pour montrer son emplacement au moment du montage.

L'unité 110 est essentiellement constituée d'une embase 111 sur laquelle est monté de manière à pouvoir pivoter selon un axe horizontal un support 112 prévu pour supporter un ensemble de tiges 113 parallèles à l'axe longitudinal xx' de la machine. Le nombre de tiges 113 est égal au nombre de tubes 21 du faisceau de tubes de l'échangeur à monter. Par ailleurs, les tiges 113 sont disposées les unes par rapport aux autres de manière identique aux tubes du faisceau de l'échangeur à monter. Le support 112 est prévu pour pivoter de manière à ce que les tiges 113 puissent prendre une première position I (celle représentée) où elles sont déportées par rapport à l'axe xx' et une seconde position II où elles sont sensiblement dans l'axe xx'.

Comme on le verra dans la suite de la présente description, les tiges 113 sont destinées à recevoir les tubes 21 du faisceau de tubes à monter. Ces tiges 113 sont par ailleurs montées de manière à pouvoir amener lesdits tubes 21 en position de montage.

L'unité de montage 120 est constituée d'une embase 121 pourvue d'un support 121a sur lequel sont montées, d'une part, une tête de montage 200 et d'autre part, des entretoises 122. Sur l'une des entretoises 122, est monté de manière à pouvoir pivoter selon un axe horizontal, un support ou plateau 123 destiné à supporter un flasque 22 de l'échangeur à monter. En pivotant, le plateau 123 peut prendre une première position I (celle de la Fig. 4) où il est déporté par rapport à l'axe xx' de la machine et une position II (visible à la Fig. 5a) où il se trouve devant la tête de montage 200. Dans cette dernière position II, le plateau 123 est solidarisable à la seconde entretoise 122.

La tête de montage 200 comprend un moyen d'entraînement 210 d'un bloc 220 constitué ici d'un vérin dont le fût est monté sur le support 121a et dont on aperçoit, à la Fig. 4, une partie de la tige 211. D'autres moyens qu'un vérin pourraient être prévus dès lors qu'ils assurent une fonction d'entraînement en translation le bloc 220.

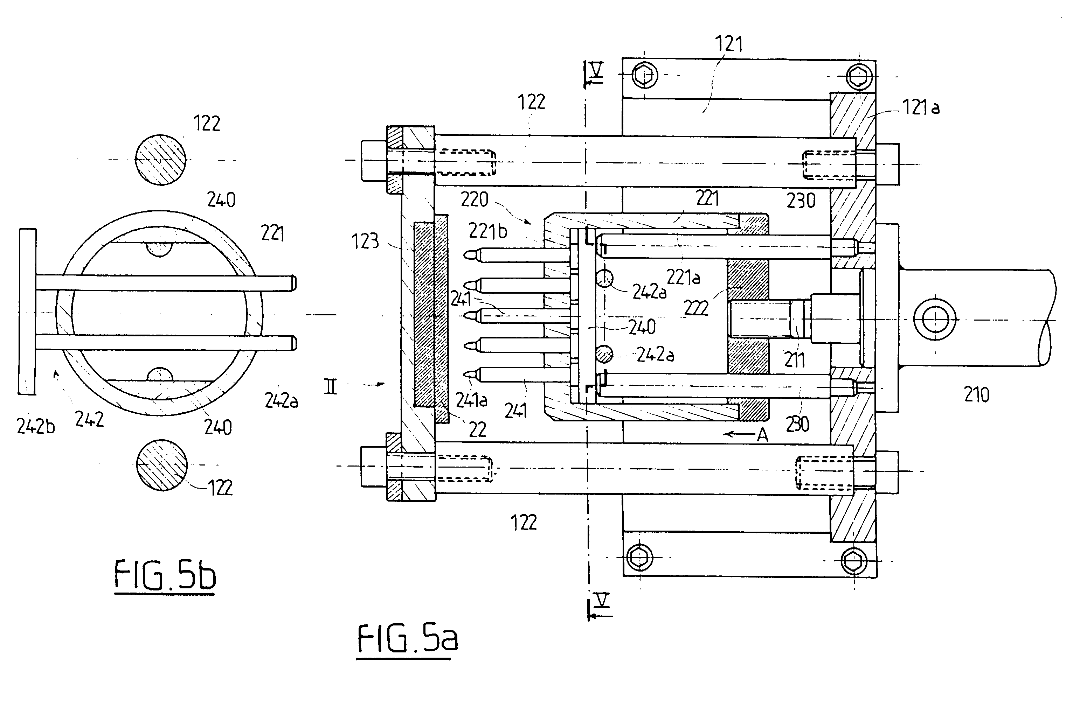

La tête de montage 200 comprend encore un bloc 220 dont la constitution est décrite ci-après en relation avec les Figs. 5a et 5b.

Sur la Fig. 5a, on peut voir que le bloc 220 comprend essentiellement un cylindre 221 présentant une cavité cylindrique borgne 221a fermée à une extrémité par un flasque 222 et à l'autre extrémité par une paroi d'extrémité 221b. Le flasque 222 est solidarisé, par exemple par vissage, à l'extrémité de la tige 211 du vérin 210. Ainsi, le cylindre 221 peut être entraîné en translation par le vérin 210.

Le flasque 222 est percé de trous prévus pour recevoir des moyens de guidage ou guides 230, lesquels se présentent sous la forme de tiges cylindriques fixées, par une de leurs extrémités, au support 121a. Ainsi, le cylindre 221 est guidé, par les guides 230, dans son mouvement de translation selon l'axe xx' de la machine, mouvement ayant pour origine l'action de la tige du vérin 210.

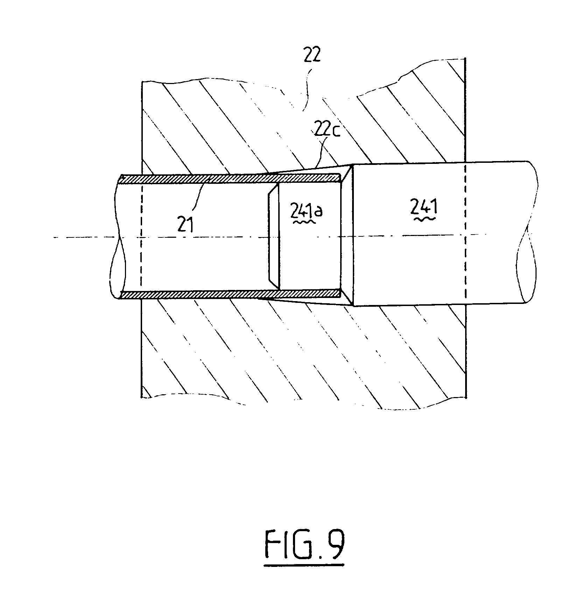

Dans la cavité cylindrique 221a, est monté un disque 240 de manière à pouvoir y coulisser selon l'axe xx'. Le disque 240 porte, sur la face qui est tournée vers le côté borgne de la cavité 221a, des doigts 241 pourvus à leurs extrémités libres de tétons 241a se présentant sous la forme d'une diminution de diamètre. Un téton 241a est visible en gros plan sur la Fig. 9. Les doigts 241 sont prévus pour pouvoir coulisser dans des trous percés dans la paroi d'extrémité 221b du cylindre 221. Ils sont par ailleurs prévus pour, lorsque le disque 240 est en butée contre la face interne de la paroi 221b, dépasser du cylindre 221 d'une longueur excédant l'épaisseur d'un flasque 22 de l'échangeur à monter. On remarquera que le disque 240 est prévu pour pouvoir se trouver en butée aux extrémités libres des guides 230.

Des piges 242a portées par un même support 242b de manière à former une fourchette 242 sont également prévues pour traverser de part en part le cylindre 221 comme cela est visible sur la coupe brisée de la Fig. 5b. Ces piges 242a sont telles qu'elles forment une butée pour le disque 240 lorsque celui-ci est plaqué contre la face 221b du cylindre 221. La fourchette 242 peut être retirée laissant ainsi libre le disque 240 de coulisser vers le flasque de la paroi 222, sous réserve de la position du cylindre 221 par rapport aux guides 230. La fourchette 242 est également visible sur la Fig. 4 où elle est en place.

On notera que la fourchette 242, lorsqu'elle est montée sur le cylindre 221, constitue avec la paroi d'extrémité 221b du cylindre 221 des moyens de couplage dudit cylindre 221 audit disque 240 portant les doigts 241.

Pour monter un faisceau de tubes 21 dans l'ensemble des trous 22c d'un des flasques 22, on procède de la manière suivante illustrée au moyen des Figs. 5a, 5b à 8.

D'abord, on monte ledit flasque 22 dans le logement prévu à cet effet du plateau 123 que l'on fait ensuite pivoter de manière qu'il prenne sa position II montrée à la Fig. 5a. La fourchette 242 est en place. Le vérin 210 est ensuite actionné de manière que la tige 211 se déplace dans le sens A (flèche A). Il pousse, par l'intermédiaire du flasque 222, le cylindre 221, lequel entraîne, par l'intermédiaire des piges 242a de la fourchette 242, le disque 240 et les doigts 241. Ceux-ci pénètrent dans les trous 22c du flasque 22 lequel repose sur le plateau 123. Les parois des trous du flasque 22 ne sont pas endommagées par cette opération du fait que les extrémités des doigts 241 ne présentent pas d'arêtes vives. On manoeuvre de nouveau le vérin 210 afin que celui-ci reprenne sa position initiale (sens inverse de A). Du fait de l'adhérence du flasque 22 sur les doigts 241, le flasque 22 recule en même temps que les doigts 241, délaissant le plateau 123 lequel, à la fin de cette opération, peut être escamoté dans sa position I.

On enfile sur chaque tige 113 un tube 21 du faisceau à monter et on place ensuite l'ensemble selon l'axe xx' de la machine en faisant pivoter leur support 112.

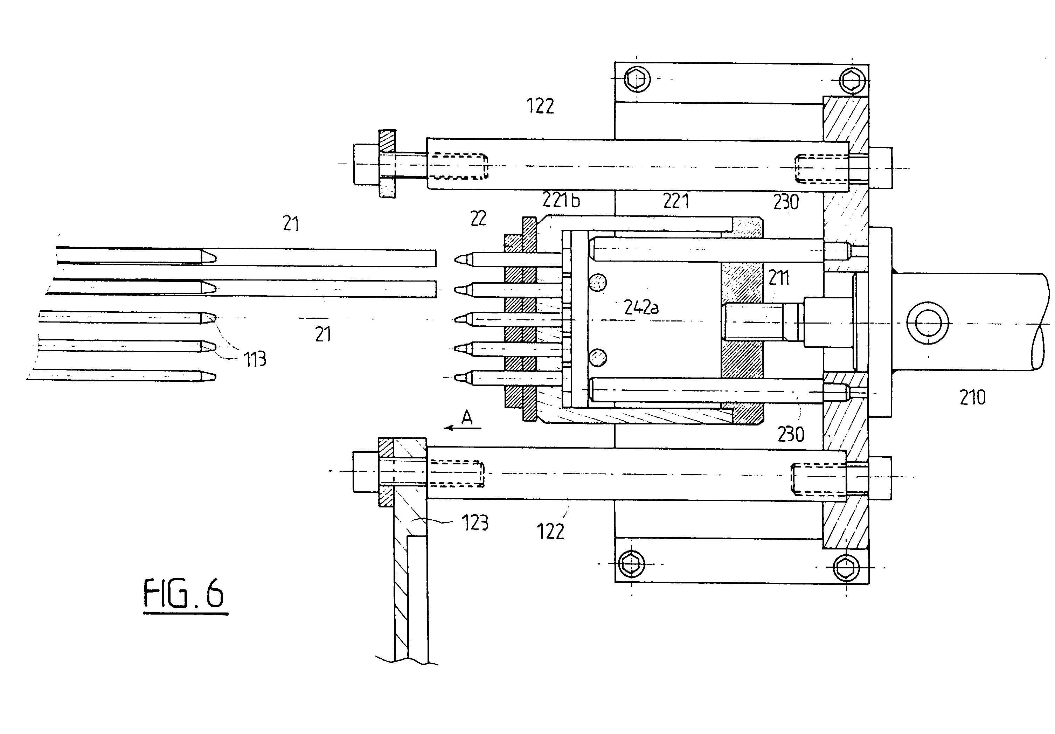

Après ces premières opérations, on se retrouve donc dans la situation qui est montrée à la Fig. 6. On a représenté seulement deux tubes 21 montés sur les tiges 113 uniquement dans un but de lisibilité de cette Fig. 6.

On pratique maintenant de la manière suivante. On retire la fourchette 242 et on actionne de nouveau le vérin 210 dans son sens A lequel entraîne le cylindre 221. Le disque 240 est dans un premier temps entraîné puisqu'il est en butée contre la paroi avant 221b du cylindre 221 et que le flasque 22 le solidarise à cette paroi. Il sera entraîné jusqu'à ce que les extrémités des doigts 241 viennent en butée contre les tubes 21. Le diamètre des tétons 241a est égal au jeu près au diamètre interne des tubes 21 si bien que les doigts 241 deviennent momentanément solidaires des tubes 21 (voir Fig. 9).

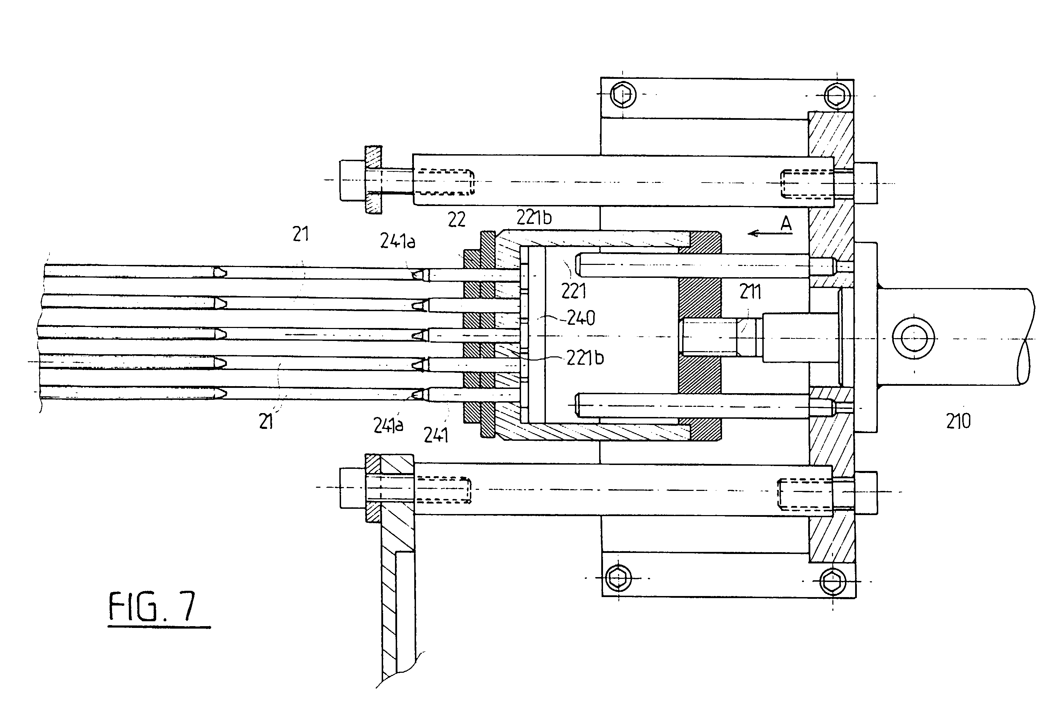

La situation est maintenant celle qui est montrée à la Fig. 7.

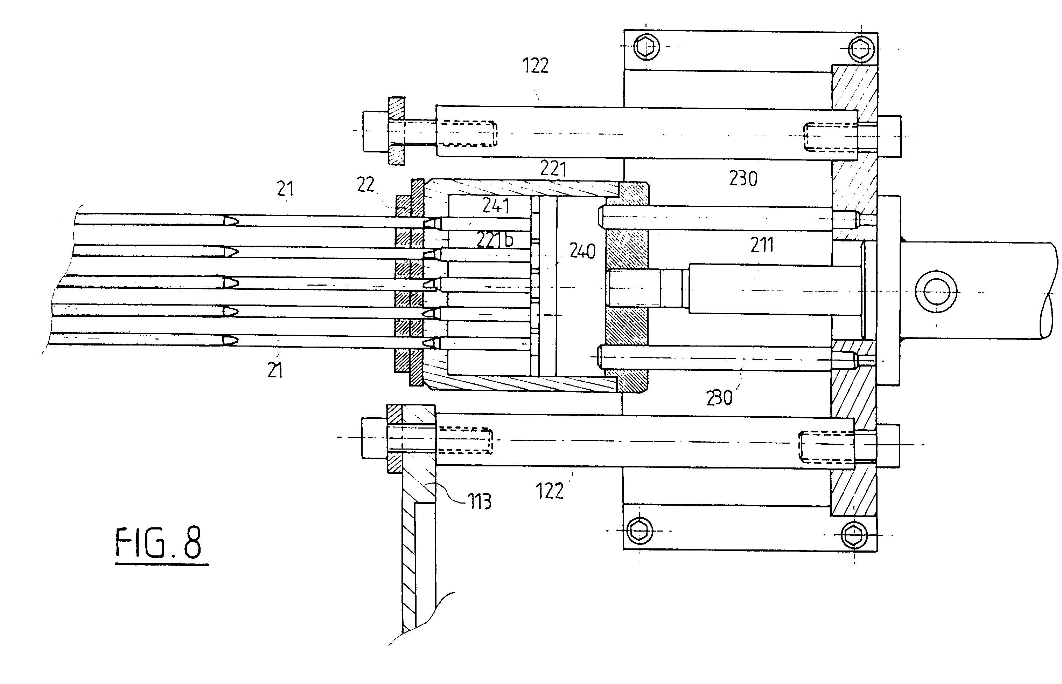

La tige 211 du vérin 210 continue sa course dans le sens A. Le disque 240 ne peut plus bouger, les doigts 241 étant en butée sur les tubes 21. Le cylindre 221 pousse donc, par sa paroi 221b, le flasque 22 lequel coulisse, d'abord, le long des doigts 241 puis sur l'extrémité des tubes 21. La situation à la fin de la course du vérin 210 est celle qui est représentée à la Fig. 8.

On notera que le passage du flasque 22 des doigts 241 aux tubes 21 se fait là aussi sans endommager les parois des trous 22c du flasque 22 dans la mesure où le diamètre des doigts 241 est légèrement supérieur aux diamètres externes des tubes 21 (comme cela est visible sur la Fig. 9).

Sur la Fig. 9, on voit le passage du flasque 22 d'un doigt 241 à un tube 21. On peut constater que la paroi du trou 22c du flasque 22 passe au-dessus de l'arête vive constituée par le bord périphérique du tube 21 sans y entrer en contact, ceci étant dû à la différence des diamètres du doigt 241 et du tube 21.

On manoeuvre ensuite le vérin 210 de manière que sa tige 211 se déplace dans le sens opposé à A. Le cylindre 221 recule, puis, dans un second temps, entraîne le disque 240 une fois celui en butée contre la paroi 221b du cylindre 221. On replace la fourchette 242 pour le montage du prochain flasque 22. On se retrouve donc dans la situation qui est montrée aux Figs. 4 et 5a.

Le montage d'un échangeur selon l'invention est le suivant.

On monte d'abord le faisceau de tubes 21 dans l'ensemble des trous 22c d'un des flasques 22 (flèche F de la Fig. 2) de la manière qui a été précédemment décrite en relation avec les Figs. 4 à 8. On enfile ensuite les plaques 50 dans le faisceau de tubes 21 et on place, de la manière précédemment décrite les entretoises 24.

On place l'ensemble ainsi formé dans le corps 10 de manière que le flasque 22 considéré vienne se loger dans un des logements 14 du corps 10 et que l'ensemble des tubes 21 se trouve à l'intérieur du corps 10.

On notera que le corps 10 étant symétrique par rapport à un plan transversal médian, l'ordre de montage des flasques 22 est sans importance.

On vient ensuite monter le second flasque 22 sur les extrémités des tubes 21 comme cela a été précédemment décrit et de manière que ledit flasque 22 repose dans l'autre logement 14 du corps 10.

On met en place une des plaques de renfort 23 qui repose alors sur la face externe du flasque considéré. On place l'écrou 40 sur la partie tronconique 33 d'une bouche 30, puis on place la partie annulaire 31 de cette dernière en appui sur un desdits flasques 22. On visse l'écrou 40 sur le filet correspondant du corps 10 ce qui a pour effet d'enserrer la plaque circulaire 22a du flasque 22 entre la face frontale 31a du tronçon 31 de la bouche 30 et le fond du logement 14 du corps 10.

On pratique de même pour l'autre plaque de renfort 23, l'autre écrou 40 et l'autre bouche 30. Le montage est ainsi terminé et l'échangeur est prêt à fonctionner.

La section totale de passage dans les tubes 21 est égale à la section d'entrée ou de sortie des bouches 30. Ainsi, l'échangeur de l'invention ne créé donc pas de perte de charge sur le circuit auquel il est raccordé.

Le corps 10 est moulé. L'amenée 12 et la sortie 13 sont réalisées par des inserts et des noyaux associés appropriés que l'opérateur vient placer dans le moule.

Ainsi, il placera dans le moule deux inserts et les noyaux associés de manière à obtenir une amenée 12 et une sortie 13 à chaque extrémité du corps 10, ladite amenée 12 et ladite sortie 13 étant de petit diamètre.

On notera que le corps 10 représenté à la Fig. 1 comporte des moyens de fixation 16, par exemple constitués de douilles introduites au moment du moulage, ainsi qu'un trou 17 pour pouvoir effectuer des vidanges de l'échangeur.

## Revendications

1. Echangeur thermique du type à faisceau de tubes (21) rectilignes et parallèles entre eux, constitué d'un corps (10) de forme générale cylindrique qui est pourvu d'une amenée (12) et d'une sortie (13) pour le fluide primaire et dont les tronçons d'extrémité (11) sont pourvus de flasques (22) fermant ledit corps (10) et à travers lesquels passent lesdits tubes (21), des bouches (30) pour l'amenée et la sortie du fluide secondaire étant respectivement prévues aux extrémités dudit corps (10), caractérisé en ce que chaque flasque (22) formé dans un matériau du type caoutchouc est constitué d'une plaque circulaire (22a) dont chacune des faces comporte sur sa périphérie un jeu de lèvres circulaires et parallèles entre elles (22e et 22f), ledit flasque (22) étant prévu pour reposer, par un desdits jeux de lèvres (22e), sur une surface radiale du tronçon d'extrémité (11) correspondant dudit corps (10), chaque bouche (30) comportant un tronçon d'extrémité (31) pourvu d'une surface frontale radiale (31a) prévue pour reposer sur l'autre jeu de lèvres (22f) dudit flasque (22), un écrou (40) étant prévu pour venir se visser sur la paroi externe de chaque tronçon d'extrémité (11) dudit corps (10), ledit écrou (40) étant pourvu de moyens (42) pour serrer ladite bouche (30) contre ledit flasque (22) de manière que ledit flasque (22) soit enserré entre ladite bouche (30) et ledit corps (10).

2. Echangeur selon la revendication 1, caractérisé en ce que chaque bouche (30) comporte sur son tronçon d'extrémité (31) un ergot (31c) destiné à pénétrer dans une rainure (15) prévue dans le tronçon d'extrémité dudit corps (10) de manière à immobiliser ladite bouche (30) en rotation lors du vissage de l'écrou (40) sur le corps (10).

3. Echangeur selon la revendication 1 ou 2, caractérisé en ce qu'il comporte des plaques de renfort (23) qui sont respectivement montées entre un flasque (22) et une bouche (30).

4. Echangeur selon la revendication 3, caractérisé en ce que lesdites plaques de renfort (23) comportent au moins un raidisseur (23a).

5. Echangeur selon une des revendications précédentes, caractérisé en ce que chaque flasque (22) est percé de trous (22c) pour le passage desdits tubes du faisceau de tubes (21), lesdits trous étant pourvus d'au moins une lèvre (22d).

6. Echangeur selon une des revendications précédentes, caractérisé en ce que chaque flasque (22) est formé en caoutchouc synthétique, du type caoutchouc d'éthylène et de polypropylène.

7. Echangeur selon une des revendications précédentes, caractérisé en ce que les tronçons d'extrémité (11) dudit corps (10) sont pourvus de logements (14) dans lesquels sont respectivement logés lesdits flasques (22) qui reposent au fond desdits logements.

8. Echangeur selon une des revendications précédentes, caractérisé en ce que lesdits flasques (22) comportent des plots (22b) percés desdits trous (22c) pour le passage desdits tubes.

9. Machine destinée au montage d'un échangeur de chaleur selon une des revendications précédentes, ladite machine comportant des moyens de montage pour permettre le montage des tubes du faisceau de tubes dans des trous (22c) de chaque flasque (22) dudit échangeur, caractérisée en ce que lesdits moyens de montage comprennent un support (123) pour supporter un desdits flasques (22) de l'échangeur, une pluralité de doigts (241) en nombre égal au nombre de tubes (21) du faisceau à monter, des moyens pour permettre auxdits doigts (241) de pénétrer et de traverser les trous (22c) correspondants du flasque (22) monté sur ledit support (123) de manière que ledit flasque (22) puisse venir reposer sur lesdits doigts (241), des moyens prévus pour amener chaque tube (21) du faisceau en prolongement d'un doigt (241) coaxialement à celui-ci, et des moyens pour pousser un flasque (22) qui repose sur lesdits doigts (241) afin de le faire passer sur les tubes (21) dudit faisceau prolongeant lesdits doigts (241), le diamètre desdits doigts (241) étant légèrement supérieur au diamètre desdits tubes (21) à monter.

10. Machine selon la revendication 9, caractérisée en ce que lesdits doigts (241) sont prévus pour se déplacer axialement dans un premier sens pour pouvoir pénétrer dans les trous correspondants du flasque monté sur ledit support (123) et dans un second sens pour entraîner avec eux un flasque (22) qui repose sur eux, lesdits doigts (241) étant prévus pour pouvoir traverser la paroi d'extrémité d'un cylindre (221) et ledit cylindre (221) étant prévu pour se déplacer axialement relativement auxdits doigts (241) dans ledit premier sens afin que ladite paroi d'extrémité puisse pousser ledit flasque (22) qui repose sur lesdits doigts (241) pour le faire passer sur les tubes (21).

11. Machine selon la revendication 10, caractérisée en ce que lesdits doigts sont portés par un disque (240) prévu pour pouvoir coulisser axialement dans un trou borgne (221a) dudit cylindre (221).

12. Machine selon la revendication 10 ou 11, caractérisée en ce que ledit cylindre (221) est prévu pour être entraîné par des moyens d'entraînement (210) et en ce qu'une fourchette (242) est prévue pour pouvoir coupler ledit cylindre (221) audit disque (240) portant lesdits doigts (241).

13. Machine selon une des revendications 9 à 12, caractérisée en ce qu'elle comprend des tiges (113) prévues pour recevoir lesdits tubes (21) du faisceau de tubes à monter et pour les mettre en position en prolongement axial desdits doigts (241).

## Patentansprüche

1. Wärmetauscher mit einem aus geraden und untereinander parallel angeordneten Rohren bestehenden Rohrbündel (21), der aus einem weitgehend zylindrischen Körper (10) besteht, welcher mit einer Zuleitung (12) und einem Auslaß (13) für das Primärfluid ausgestattet ist, und dessen Endabschnitte (11) mit Flanschen (22) versehen sind, welche den Körper (10) verschließen und von den Rohrbündeln (21) durchquert werden, und der jeweils an den Endabschnitten des Körpers (10) Mündungen (30) für die Zuleitung und den Auslaß des Sekundärfluids aufweist,
**dadurch gekennzeichnet, dass**
der aus einem gummiartigen Material hergestellte Flansch (22) aus einer kreisförmigen Platte (22a) besteht, deren beide Seiten an ihrem Umfang einen Satz kreisförmiger paralleler Lippen (22e und 22F) enthalten, und dass der Flansch (22) so ausgelegt ist, dass er über einen Satz dieser Lippen (22e) an einer radialen Fläche des Endabschnittes (11) des Körpers (10) anliegen kann, und dass die Mündungen (30) einen Endabschnitt (31) mit einer radialen Vorderseite (31a) aufweisen, welche an dem anderen Satz Lippen (22f) des Flansches (22) anliegen kann, und dass eine Mutter (40) vorgesehen ist, welche auf die Außenwand der Endabschnitte (11) des Körpers (10) aufgeschraubt werden kann, und dass die Mutter (40) mit Mitteln (42) ausgestattet ist, um die Mündung (30) an dem Flansch (22) so festzuschrauben, dass der Flansch (22) zwischen der Mündung (30) und dem Körper (10) eingespannt wird.

2. Wärmetauscher nach Anspruch 1,
**dadurch gekennzeichnet, dass**
die Mündungen (30) an ihrem Endabschnitt (31) eine Nase (31c) aufweisen, die in eine Nut (15) eingreift, welche in dem Endabschnitt des Körpers (10) vorgesehen ist, um die Mündung (30) während der Verschraubung der Mutter (40) auf dem Körper (10) zu blockieren.

3. Wärmetauscher nach einem der Ansprüche 1 oder 2,
**dadurch gekennzeichnet, dass**
er Verstärkungsplatten (23) aufweist, die jeweils zwischen einem Flansch (22) und einer Mündung (30) angeordnet sind.

4. Wärmetauscher nach Anspruch 3,
dadurch gekennzeichnet, dass
diese Verstärkungsplatten (23) mindestens eine Versteifung (23a) aufweisen.

5. Wärmetauscher nach einem der vorausgegangenen Ansprüche,
dadurch gekennzeichnet, dass
die Flansche (22) mit Bohrungen (22c) für den Durchgang der Rohre des Rohrbündels (21) versehen sind, und dass diese Bohrungen mit mindestens einer Lippe (22d) ausgestattet sind.

6. Wärmetauscher nach einem der vorausgegangenen Ansprüche,
**dadurch gekennzeichnet, dass**
die Flansche (22) aus einem synthetischen Kautschuk hergestellt sind, wie zum Beispiel einem Ethylen oder einem Propylen.

7. Wärmetauscher nach einem der vorausgegangenen Ansprüche,
**dadurch gekennzeichnet, dass**
die Endabschnitte (11) des Körpers (10) mit Aufnahmen (14) ausgestattet sind, in welche die Flansche (22) eingesetzt werden, die dann am Grund dieser Aufnahmen anliegen.

8. Wärmetauscher nach einem der vorausgegangenen Ansprüche,
**dadurch gekennzeichnet, dass**
die Flansche (22) Zapfen (22b) aufweisen, die in die Bohrungen (22c) für den Durchgang der Rohre eingebracht sind.

9. Maschine für die Montage eines Wärmetauschers nach einem der vorausgegangenen Ansprüche, wobei diese Maschine Mittel für die Montage aufweist, um den Einbau der Rohre des Rohrbündels in die Bohrungen (22c) der Flansche (22) des Wärmetauschers zu ermöglichen,
**dadurch gekennzeichnet, dass**
diese Montagemittel eine Halterung (123) aufweisen, um einen der Flansche (22) des Wärmetauschers zu halten, sowie eine Vielzahl von Fingern (241) enthalten, deren Anzahl der Anzahl der Rohre des zu montierenden Rohrbündels (21) entspricht, und dass Mittel vorgesehen sind, die es ermöglichen, dass die Finger (241) in die entsprechenden Bohrungen (22c) des Flansches (22) eingreifen und ihn durchqueren können, der an der Halterung (123) so montiert ist, dass der Flansch (22) an den Fingern (241) anliegen kann, und dass Mittel vorgesehen sind, um die Rohre des Rohrbündels (21) in der dazu axial liegenden Verlängerung eines Fingers (241) anzuordnen, und dass Mittel vorgesehen sind, um einen Flansch (22), der an diesen Fingern (241) anliegt, so zu verschieben, dass er sich auf die Rohre des Rohrbündels (21) bewegen kann, welche die Finger (241) verlängert, wobei der Durchmesser dieser Finger (241) etwas größer ist, als der Durchmesser des zu montierenden Rohrbündels (21).

10. Maschine nach Anspruch 9,
**dadurch gekennzeichnet, dass**
die Finger (241) so gestaltet sind, dass sie sich axial in einer ersten Richtung bewegen können, um in die entsprechenden Bohrungen des an der Halterung (123) montierten Flansches eindringen zu können, und in einer zweiten Richtung bewegen können, um einen daran anliegenden Flansch (22) mitzuziehen, und dass die Finger (241) so gestaltet sind, dass sie die Endwand eines Zylinders (221) durchqueren können, und dass der Zylinder (221) so ausgelegt ist, dass er sich axial gegenüber den Fingern (241) in dieser ersten Richtung bewegen kann, damit die Endwand den Flansch (22) verschieben kann, der an den Fingern (241) anliegt, um ihn auf die Rohre (21) zu schieben.

11. Maschine nach Anspruch 10,
**dadurch gekennzeichnet, dass**
die Finger von einer Scheibe (240) getragen werden, die axial in einem Blindloch (221a) des Zylinders (221) gleiten kann.

12. Maschine nach einem der Ansprüche 10 oder 11,
**dadurch gekennzeichnet, dass**
der Zylinder (221) so gestaltet ist, dass er durch Antriebsmittel (210) angetrieben werden kann, und dadurch, dass ein Bügel (242) vorgesehen ist, um den Zylinder (221) mit der Scheibe (240) zu verbinden, welche die Finger (241) trägt.

13. Maschine nach einem der Ansprüche 9 bis 12,
**dadurch gekennzeichnet, dass**
sie Gestänge (113) enthält, welche die Rohre (21) des zu montierenden Rohrbündels aufnehmen können und sie in der axialen Verlängerung der Finger (241) anordnen.

## Claims

1. Heat exchanger of the type with a bank of tubes (21) in a straight line and parallel to one another, made up of a body (10) of overall cylindrical shape which is provided with a supply (12) and an outlet (13) for the primary fluid and the end sections (11) of which are provided with flanges (22) closing said body (10) and through which said tubes (21) pass, openings (30) for the supply and exit of the secondary fluid being respectively provided at the ends of said body (10), characterised in that each flange (22) formed from a rubber-type material is made up of a circular plate (22a), each of the surfaces of which comprises on its periphery a set of circular lips parallel to one another (22e and 22f), said flange (22) being intended to rest, via one of the said sets of lips (22e), on a radial surface of the corresponding end section (11) of said body (10), each opening (30) comprising an end section (31) provided with a radial frontal surface (31a) intended to rest on the other set of lips (22f) of said flange (22), a nut (40) being provided to be screwed on the external wall of each end section (11) of said body (10), said nut (40) being provided with means (42) to tighten said opening (30) against said flange (22) so that said flange (22) is imprisoned between said opening (30) and said body (10).

2. Exchanger according to claim 1, characterised in that each opening (30) comprises on its end section (31) a tip (31c) designed to penetrate a groove (15) provided in the end section of said body (10) in order to immobilise said opening (30) when it rotates during the screwing of the nut (40) on the body (10).

3. Exchanger according to claim 1 or 2, characterised in that it comprises strengthening plates (23) which are respectively fitted between a flange (22) and an opening (30).

4. Exchanger according to claim 3, characterised in that said strengthening plates (23) comprise at least one stiffener (23a).

5. Exchanger according to one of the preceding claims, characterised in that each flange (22) is drilled with holes (22c) for the passage of said tubes from the bank of tubes (21), said holes being provided with at least one lip (22d).

6. Exchanger according to one of the preceding claims, characterised in that each flange (22) is formed in artificial rubber, of the ethylene and polypropylene rubber type.

7. Exchanger according to one of the preceding claims, characterised in that the end sections (11) of said body (10) are provided with arrangements (14) in which are respectively seated said flanges (22) which rest at the bottom of said arrangements.

8. Exchanger according to one of the preceding claims, characterised in that said flanges (22) comprise studs (22b) drilled with said holes (22c) for the passage of said tubes.

9. Machine intended for the fitting of a heat exchanger according to one of the preceding claims, said machine comprising fitting means to allow the fitting of tubes from the bank of tubes in holes (22c) of each flange (22) of said exchanger, characterised in that said fitting means comprise a support (123) to support one of said flanges (22) of the exchanger, a plurality of fingers (241) in a number equal to the number of tubes (21) of the bank to be fitted, means to allow said fingers (241) to enter and go through the corresponding holes (22c) of the flange (22) fitted on said support (123) so that said flange (22) can come to rest on said fingers (241), means designed to bring each tube (21) of the bank in extension of a finger (241) coaxially to it, and means to push a flange (22) which rests on said fingers (241) in order to make it pass on the tubes (21) of said bank extending said fingers (241), the diameter of said fingers (241) being slightly greater than the diameter of said tubes (21) to be fitted.

10. Machine according to claim 9, characterised in that said fingers (241) are designed to move axially in a first direction to be able to enter the corresponding holes of the flange fitted on said support (123) and in a second direction to carry along with them a flange (22) which rests on them, said fingers (241) being intended to be able to go through the end wall of a cylinder (221) and said cylinder (221) being intended to be able to move axially relatively to said fingers (241) in said first direction so that said end wall can push said flange (22) which rests on said fingers (241) to make it pass on the tubes (21).

11. Machine according to claim 10, characterised in that said fingers are carried on a disc (240) intended to be able to slide axially in a blind hole (221a) of said cylinder (221).

12. Machine according to claim 10 or 11, characterised in that said cylinder (221) is intended to be carried along by driving means (210) and in that a fork (242) is provided to be able to connect said cylinder (221) to said disc (240) carrying said fingers (241).

13. Machine according to one of claims 9 to 12, characterised in that it comprises rods (113) provided to receive said tubes (21) of the bank of tubes and to put them in an axial extension position of said fingers (241).
